(19) Europäisches Patentamt
European Patent Office
Office européen des brevets

(11) **EP 3 465 902 B1**

(12) **FASCICULE DE BREVET EUROPEEN**

(45) Date de publication et mention
de la délivrance du brevet:
**23.12.2020 Bulletin 2020/52**

(21) Numéro de dépôt: **17727258.0**

(22) Date de dépôt: **06.06.2017**

(51) Int Cl.:
*H02P 25/03* (2016.01)  *H02P 29/024* (2016.01)
*F02N 11/08* (2006.01)  *F02C 7/268* (2006.01)
*F02C 7/32* (2006.01)  *F02N 11/04* (2006.01)

(86) Numéro de dépôt international:
**PCT/EP2017/063726**

(87) Numéro de publication internationale:
**WO 2017/211838 (14.12.2017 Gazette 2017/50)**

(54) **DÉMARREUR GÉNÉRATEUR SANS BALAIS**

**BÜRSTENLOSER STARTERGENERATOR**

**BRUSHLESS STARTER GENERATOR**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.06.2016 FR 1600909**

(43) Date de publication de la demande:
**10.04.2019 Bulletin 2019/15**

(73) Titulaire: **Thales**
**92400 Courbevoie (FR)**

(72) Inventeurs:
• **TUNZINI, Marc**
**78400 CHATOU (FR)**
• **LE GUERROUE, Eric**
**78400 CHATOU (FR)**
• **BEDJAI, Stanislas**
**78400 CHATOU (FR)**

(74) Mandataire: **Marks & Clerk France**
**Immeuble "Visium"**
**22, avenue Aristide Briand**
**94117 Arcueil Cedex (FR)**

(56) Documents cités:
**FR-A1- 2 348 594  FR-A1- 2 952 130**
**US-A- 5 055 700**

EP 3 465 902 B1

**Description**

La présente invention se rapporte aux générateurs démarreurs de turbomachines.

Le domaine d'application de l'invention est plus particulièrement celui des démarreurs-générateurs pour des moteurs aéronautiques de propulsion à turbine à gaz montés sur des aéronefs. L'invention est toutefois applicable à d'autres types de turbomachines, par exemple des turbines industrielles, des turbines d'hélicoptères ou des turbines de groupes auxiliaires de puissance ou APU acronyme de l'expression anglo-saxonne « Auxiliary Power Unit ».

Un tel démarreur-générateur comprend une machine électrique tournante destinée à être couplée mécaniquement à un arbre d'une turbomachine. Le démarreur-générateur est apte à fonctionner dans un mode générateur, pendant une phase dite de génération, lors de laquelle la turbomachine entraine l'arbre en rotation et la machine tournante transforme l'énergie mécanique de rotation de l'arbre en énergie électrique destinée à alimenter électriquement un réseau secondaire, par exemple un réseau de bord d'un aéronef. Le démarreur-générateur est également apte à fonctionner en mode démarreur, pendant une phase dite de démarrage, lors de laquelle la machine électrique tournante fournit la puissance mécanique à l'arbre de la turbomachine pour mettre et entraîner en rotation l'arbre de la turbomachine de façon à démarrer la turbomachine.

La machine tournante d'un tel démarreur-générateur ou S/G (« Starter/generator ») comprend de façon usuelle une machine électrique principale, une excitatrice et éventuellement une génératrice auxiliaire. Ces éléments de la machine tournante sont montés sur un arbre commun couplé mécaniquement à un arbre de la turbomachine. Un tel démarreur-générateur est un démarreur-générateur sans balais (ou « brushless » en terminologie anglo-saxonne).

La machine électrique principale forme une génératrice électrique principale (ou alternateur) fonctionnant en mode synchrone. La machine électrique principale possède un enroulement rotorique et des enroulements statoriques qui, lorsqu'elle fonctionne en mode génératice synchrone, convertissent une énergie mécanique fournie par un arbre couplé mécaniquement à la turbomachine en une énergie électrique triphasée alternative alimentant un réseau de bord d'un aéronef via une ligne d'alimentation. Pour les applications aéronautiques, le réseau de bord alternatif des aéronefs, alimenté par la tension délivrée par le démarreur-générateur fonctionnant en génératrice, est constitué par du triphasé 115 V efficace phase/neutre et 200 V efficace entre phases. Il peut être à fréquence fixe 400 Hz, ou à fréquence variable (généralement entre 350 et 800 Hz).

L'excitatrice comprend un stator comprenant deux enroulements statoriques dont l'un des deux enroulements statoriques est alimenté en courant continu pendant la phase de génération et dont l'autre est alimenté en courant alternatif pendant la phase de démarrage. Ces enroulements respectifs sont appelés enroulement statorique à courant continu et enroulement statorique à courant alternatif dans la suite du texte. La tension alternative fournie par la génératrice principale en phase de génération est régulée au moyen d'un régulateur d'alternateur ou GCU (« Generator Control Unit ») qui alimente en courant continu, dit courant de régulation, l'enroulement statorique à courant continu de l'excitatrice, lors de la phase de génération et qui ne l'alimente pas en phase de démarrage. L'excitatrice fonctionne alors comme une génératrice synchrone qui fournit l'énergie électrique requise par le rotor de la machine électrique principale lors du fonctionnement générateur de l'alternateur principal (qui est la machine électrique principale).

L'excitatrice comprend un rotor comprenant des enroulements rotoriques reliés à l'enroulement rotorique de la machine électrique principale via un redresseur tournant de manière à fournir en sortie un courant continu pour l'excitation de l'enroulement rotorique de la machine principale.

Afin de limiter le courant de régulation, l'enroulement statorique à courant continu comporte un grand nombre de spires. Par exemple, l'enroulement statorique de démarrage comporte 480 spires, soit 4 Ohms, ce qui permet d'obtenir 1152 Ampères-tours d'excitation avec 2.4 A venant du régulateur. En phase de démarrage, lorsque l'arbre de la turbomachine ne tourne pas, si l'enroulement statorique à courant continu de l'excitatrice est alimenté en courant continu, il ne peut pas générer dans les enroulements rotoriques de l'excitatrice un courant alternatif permettant de mettre en rotation l'arbre commun couplé à l'arbre de la turbomachine. En effet, si l'enroulement statorique à courant continu de l'excitatrice est alimenté en courant continu, il n'y a pas de courant dans l'enroulement rotorique de la machine électrique principale et il n'est pas possible de créer un couple pour entraîner en rotation le rotor de la machine électrique principale. L'excitatrice ne peut pas travailler comme un générateur synchrone en l'absence de rotation. Il est nécessaire d'alimenter électriquement l'excitatrice en courant alternatif pour que l'excitatrice développe sur ses enroulements rotoriques une tension alternative qui, après redressement, alimente l'enroulement rotorique de la machine électrique principale. A l'arrêt, l'excitatrice se comporte par conséquent comme un transformateur ayant un entrefer. Si on choisit d'utiliser l'enroulement statorique à courant continu de l'excitatrice pendant la phase de démarrage, l'impédance engendrée par l'important nombre de spires et la fréquence d'alimentation élevée nécessite une tension d'alimentation de 5500 volts afin d'assurer les 2900 Ampères-tours d'induction magnétisante. Ce niveau de tension n'étant généralement pas disponible sur l'aéronef, il est nécessaire de le générer au travers d'un convertisseur élévateur de tension d'un coût et d'une masse rédhibitoire. C'est pour cette raison que l'enroulement statorique à courant alternatif est prévu dans l'excitatrice. Cet enroulement est destiné à être alimenté en courant alternatif monophasé pendant la phase de démarrage de façon à induire des courants dans le rotor de l'excitatrice, courants qui vont être redressés pour alimenter les enroulements rotoriques de la machine électrique principale qui va alors pouvoir délivrer une puissance mécanique assurant le démarrage de la turbomachine.

Idéalement, les enroulements statoriques à courant continu et alternatif sont mis en quadrature afin de limiter l'effet de mutuelle entre ces deux enroulements et ainsi éviter la tension induite aux bornes de l'enroulement générateur lorsque l'enroulement de démarrage est alimenté en courant alternatif. Cette disposition en quadrature est décrite dans la demande de brevet française publiée avec le numéro de publication FR 2 348 594.

Toutefois, on constate toujours la génération d'une tension importante aux bornes de l'enroulement générateur, qui s'élève à 900V dans notre exemple, lors de la phase de démarrage. Cette tension élevée est due à plusieurs facteurs dont les fuites magnétiques et le recouvrement des diodes tournantes du pont redresseur. Cette tension peut provoquer des détériorations du régulateur d'alternateur GCU.

Afin d'éviter cette surtension, une première solution consiste à limiter le ratio du nombre de spires entre les enroulements statoriques à courant continu et alternatif et à concevoir un régulateur d'alternateur capable de résister à la tension engendrée par ce ratio en phase de démarrage. Toutefois, cette solution présente l'inconvénient de réduire le gain d'excitation c'est-à-dire le rapport entre le courant injecté dans l'excitatrice et le courant envoyé dans le rotor de la machine électrique principale.

Une deuxième solution consiste à introduire un contacteur permettant d'ouvrir et de fermer chacune des deux lignes de courant continu qui relient l'enroulement statorique à courant continu et le premier régulateur. Une de ces deux lignes relie une des bornes de l'enroulement statorique à courant continu et le régulateur et l'autre ligne relie l'autre borne de l'enroulement statorique à courant continu et le régulateur. Ce contacteur est piloté pour ouvrir chacune des deux lignes de façon à isoler le régulateur d'alternateur CGU de la machine tournante pendant la phase de démarrage et à fermer chacune de ces deux lignes pendant la phase de génération. Ce contacteur permet de protéger le régulateur des surtensions. L'inconvénient majeur est que ce contacteur est encombrant et coûteux car il doit à la fois supporter des tensions élevées en phase de démarrage et des courants élevés en phase de génération.

Dans les deux cas le nombre de spires est limitant car la tension générée entre les deux lignes en phase de génération peut atteindre les limites d'isolation des câbles et autres isolants. Le fait de ne pas pouvoir augmenter le nombre de spires de l'enroulement statorique à courant alternatif ne permet pas de réduire le courant d'excitation dans l'enroulement statorique à courant alternatif en phase de démarrage, ce qui nécessite de dimensionner les deux lignes électriques et le régulateur d'alternateur pour supporter des courants élevés.

Un but de l'invention est de pallier au moins un des inconvénients précités.

A cet effet, l'invention se rapporte à un démarreur-générateur sans balais destiné à être couplé mécaniquement à une turbomachine, ledit démarreur-générateur étant apte à fonctionner en mode démarreur de façon à entraîner en rotation ledit arbre pour démarrer la turbomachine, ou en mode générateur électrique synchrone de façon à transformer en une énergie électrique une énergie mécanique fournie par la turbomachine, le démarreur-générateur comprenant :

- une machine électrique principale ayant un stator comprenant des enroulements statoriques et un rotor comprenant un enroulement rotorique bobiné,
- un redresseur tournant,
- une excitatrice comprenant un stator comprenant un enroulement statorique à courant continu et un enroulement statorique à courant alternatif et un rotor comprenant des enroulements rotoriques reliés à l'enroulement rotorique de la machine électrique principale via le redresseur tournant, les rotors de la machine électrique principale et de l'excitatrice étant destinés à être couplés mécaniquement à la turbomachine, un régulateur d'alternateur destiné à être relié à l'enroulement statorique à courant continu via la première et la deuxième lignes électriques à courant continu et destiné à alimenter électriquement l'enroulement statorique à courant continu lorsque le démarreur-générateur fonctionne en mode générateur afin de générer une tension électrique en sortie du stator de la machine électrique principale,
- un régulateur-démarreur SBU destiné à alimenter électriquement l'enroulement statorique à courant alternatif et les enroulements statoriques de la machine électrique principale, lorsque le démarreur générateur fonctionne en mode démarreur, caractérisé en ce qu'il comprend un dispositif de liaison électrique agencé et configuré pour établir une liaison électrique entre les deux lignes électriques lorsque le démarreur-générateur fonctionne en mode démarreur.

Avantageusement, le dispositif de liaison comprend un élément de liaison relié électriquement d'une part à la première ligne électrique et d'autre part à la deuxième ligne électrique et permettant, lorsqu'il est dans un premier état fermé, d'établir une liaison électrique entre la première ligne électrique et la deuxième ligne électrique et, lorsqu'il est dans un deuxième état ouvert, de supprimer cette liaison électrique entre la première ligne et la deuxième ligne ;

- le dispositif de liaison comprend une commande permettant de piloter le basculement de l'élément de liaison entre le premier état fermé et le deuxième état ouvert, la commande étant configurée pour mettre l'élément de liaison dans le premier état fermé lorsque le démarreur-générateur fonctionne en mode démarreur et pour mettre l'élément de liaison dans le deuxième état ouvert lorsque le démarreur-générateur fonctionne en mode générateur.

Dans un deuxième mode de réalisation, le dispositif de liaison comprend un élément de liaison comprenant un conducteur ohmique relié électriquement d'une part à la première ligne électrique et d'autre part à la deuxième ligne électrique.

Avantageusement, la résistance électrique du conducteur ohmique est supérieure à celle de l'enroulement statorique à courant continu.

Avantageusement, le dispositif de liaison comprend un élément de liaison relié d'une part à la première ligne électrique et d'autre part à la deuxième ligne électrique, et dans lequel l'élément de liaison est fixé au régulateur d'alternateur.

Avantageusement, le démarreur-générateur comprend une machine tournante comprenant la machine principale, l'excitatrice et un carter renfermant la machine principale et l'excitatrice. Le démarreur-générateur comprend en outre un ensemble de régulation comprenant le régulateur d'alternateur et l'élément de liaison, l'ensemble de régulation et la machine tournante formant deux objets reliés électriquement ou destinés à être reliés électriquement entre eux. Avantageusement, le régulateur d'alternateur comprend un premier régulateur permettant de réguler la tension et/ou le courant d'alimentation de l'enroulement statorique à courant continu, le premier régulateur comprenant des composants de puissance reliés électriquement entre eux par des pistes conductrices formées sur un circuit imprimé, l'élément de liaison étant rapporté sur le circuit imprimé.

Avantageusement, le dispositif de liaison comprend un élément de liaison relié d'une part à la première ligne électrique et d'autre part à la deuxième ligne électrique, et dans lequel le régulateur d'alternateur comprend un premier support et un premier régulateur alimenté en courant continu et permettant de réguler la tension et/ou le courant d'alimentation de l'enroulement statorique à courant continu, dans lequel le premier support est un boîtier logeant le premier régulateur et l'élément de liaison.

Avantageusement, le régulateur-démarreur comprend un onduleur monophasé et un onduleur triphasé fixés au régulateur d'alternateur.

Avantageusement, le démarreur-générateur comprend un carter logeant la machine électrique principale et l'excitatrice et l'élément de liaison est fixé au carter.

Avantageusement, l'élément de liaison est logé dans le carter.

Avantageusement, le démarreur-générateur comprend un ensemble de transformation comprenant la machine tournante et l'élément de liaison, l'ensemble de transformation et le régulateur d'alternateur formant deux objets reliés électriquement ou destinés à être reliés électriquement entre eux.

En variante, le régulateur d'alternateur est fixé au carter par exemple par l'intermédiaire du circuit imprimé ou du boitier.

Avantageusement, l'enroulement statorique à courant continu et l'enroulement statorique à courant alternatif sont montés sensiblement en quadrature de phase de manière à limiter la tension induite dans l'enroulement statorique à courant continu lorsque le démarreur-générateur fonctionne en mode démarreur.

D'autres caractéristiques et avantages de l'invention apparaîtront à la lecture de la description détaillée qui suit, faite à titre d'exemple non limitatif et en référence aux dessins annexés dans lesquels :

- la figure 1 représente schématiquement un démarreur-générateur selon un premier mode de réalisation de l'invention,
- la figure 2 représente schématiquement un agencement préféré des enroulements statoriques à courant continu et alternatif,
- la figure 3 représente schématiquement un démarreur-générateur selon un premier mode de réalisation de l'invention.

D'une figure à l'autre, les mêmes éléments sont repérés par les mêmes références.

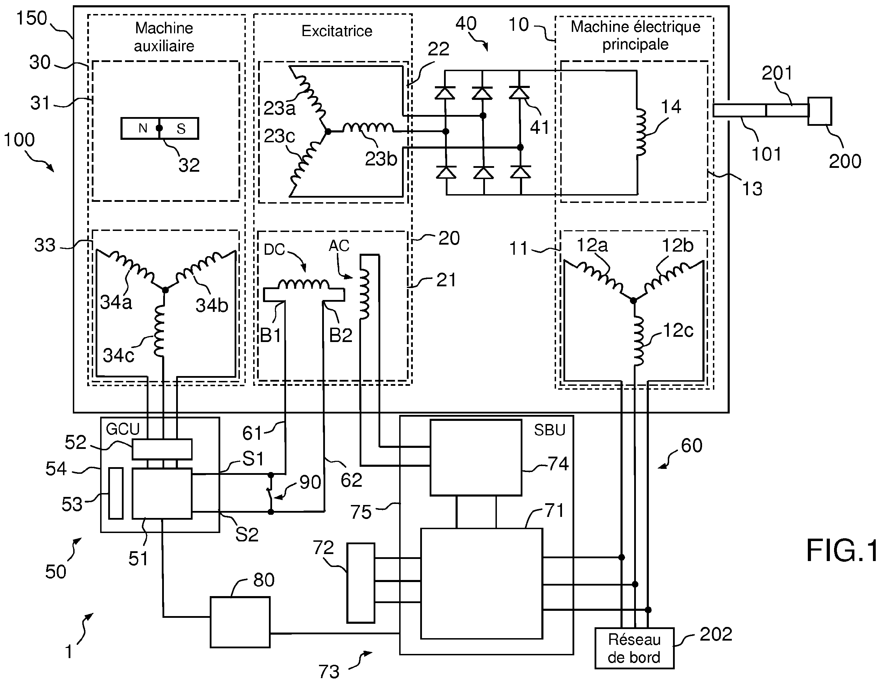

La figure 1 représente schématiquement un démarreur-générateur sans balais 1 à excitation rotorique bobinée selon l'invention. Ce démarreur-générateur comprend une machine électrique tournante 100. La machine tournante est destinée à être couplée mécaniquement à un arbre 201 d'une turbomachine 200. Le démarreur-générateur est apte à fonctionner en mode générateur, pendant une phase dite de génération, lors de laquelle la turbomachine fournit la puissance motrice à la machine électrique tournante 100. Lors de cette phase la machine tournante 100 transforme l'énergie mécanique de rotation de l'arbre en énergie électrique destinée à alimenter un réseau électrique secondaire, par exemple un réseau de bord d'un aéronef. Le démarreur-générateur est également apte à fonctionner en mode démarreur, pendant une phase de démarrage, lors de laquelle il entraîne en rotation l'arbre de la turbomachine de façon à démarrer la turbomachine.

La machine tournante comprend trois sous machines : une machine électrique principale 10, une excitatrice 20, éventuellement une génératrice auxiliaire 30, ainsi qu'un pont redresseur tournant 40. La machine tournante comprend un carter 150 logeant la machine électrique principale, l'excitatrice et l'éventuelle génératrice auxiliaire. Le stator de la machine tournant est fixé au carter 150.

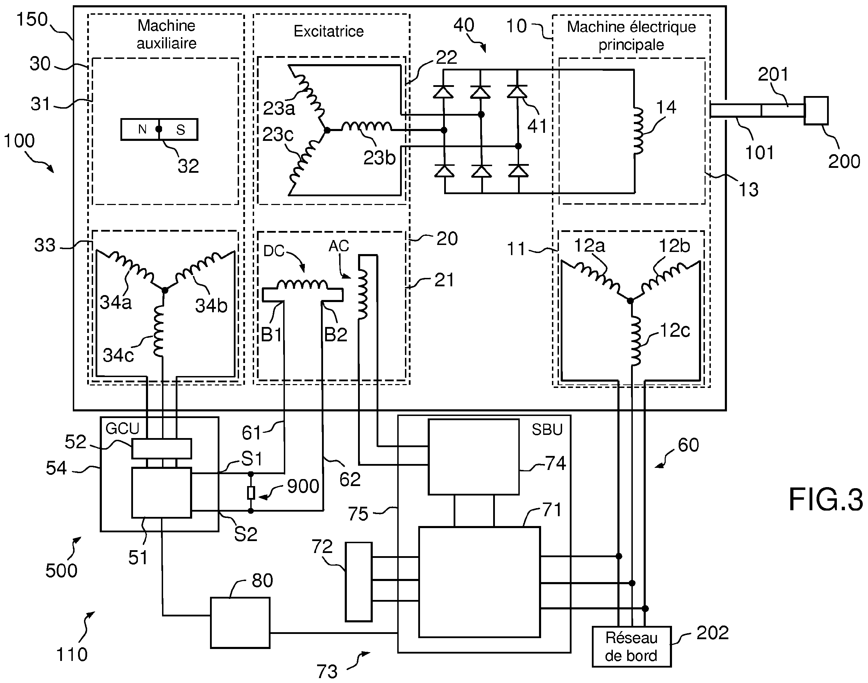

Les rotors de la machine électrique principale 10, de l'excitatrice 20 et de la génératrice auxiliaire 30 forment le rotor de la machine électrique 100. Ils sont montés sur un arbre commun 101 dont seule la partie extérieure au carter 150 est représentée sur les figures 1 et 3. L'arbre commun 101 est destiné à être couplé mécaniquement à un arbre 201 d'une turbomachine 200. La turbomachine est par exemple un moteur de propulsion d'un aéronef. Le carter 150 est destiné à être monté sur un support de l'équipement comprenant la turbomachine, par exemple un support d'un aéronef. En mode démarreur, la machine électrique tournante 100 entraine l'arbre commun 101 en rotation. L'arbre commun 101 tourne par rapport au carter 150.

Le démarreur-générateur comprend des éléments pour accélérer le rotor 13 de la machine électrique principale 10 couplés mécaniquement à la turbomachine 200, de façon à démarrer la turbomachine, sans utiliser de dispositif de démarrage auxiliaire. Lorsque le démarreur-générateur 1 fonctionne en mode démarreur, la machine électrique principale 10 constitue un moteur électrique synchrone qui fournit le couple nécessaire à la mise en rotation de la turbomachine 200. Lorsque que le démarreur-générateur fonctionne en mode démarreur, l'excitatrice 20 est alimentée en courant alternatif de façon à démarrer la turbomachine. Lorsque vitesse de rotation de l'arbre de la turbomachine atteint un premier seuil, cette alimentation est coupée car le couple produit par la turbomachine est suffisant pour que la turbomachine entretienne seule le mouvement de l'arbre 201. Le démarreur-générateur ne fonctionne alors plus en mode démarreur. La vitesse de rotation de l'arbre de la turbomachine accélère d'elle-même, c'est-à-dire de façon autonome, jusqu'à atteindre un deuxième seuil, supérieur au premier seuil, à partir duquel le démarreur-générateur va pouvoir fonctionner en mode générateur. Les modes générateur et démarreur ne sont pas simultanés.

La machine électrique principale 10 comprend un stator 11 comprenant des enroulements statoriques 12a, 12b, 12c, qui peuvent être connectés en étoile, à courant alternatif polyphasé, et un rotor 13 comprenant un enroulement rotorique 14.

En mode générateur, la turbomachine ayant été démarrée, la machine électrique principale 10 constitue une génératrice électrique synchrone qui transforme l'énergie mécanique de rotation de l'arbre commun 101 couplé mécaniquement à l'arbre 201 de turbomachine en une tension électrique U délivrée en sortie de son stator 11 sur une ligne d'alimentation 60 qui achemine la tension électrique U vers un dispositif destiné à être alimenté électriquement, par exemple le réseau de bord 202 de l'aéronef. Cette tension U est une tension électrique triphasée.

L'excitatrice 20 comprend un stator 21 comprenant un enroulement statorique à courant continu DC ou inducteur statorique bobiné à courant continu DC et un enroulement statorique à courant alternatif AC ou l'inducteur statorique bobiné à courant alternatif AC et un rotor 22 comprenant des enroulements rotoriques 23a, 23b, 23c, qui peuvent être connectés en étoile. Les courants alternatifs développés au rotor 22 de l'excitatrice 20 sont redressés par un redresseur tournant 40, tel qu'un pont de diodes 41 tournant, pour alimenter l'enroulement rotorique 14 de la machine électrique principale 10 en courant continu.

La génératrice auxiliaire 30 est par exemple une génératrice synchrone comprenant un rotor 31 comprenant des aimants permanents 32 et un stator 33 comprenant des enroulements statoriques 34a, 34b, 34c.

Les stators de l'éventuelle génératrice auxiliaire, de l'excitatrice et de la machine principale forment le stator de la machine tournante. Il est fixe par rapport au carter 150.

Les rotors et stators précités comprennent chacun une structure sur laquelle sont fixés les enroulements du rotor ou stator correspondant.

Le démarreur-générateur 1 comprend en outre un régulateur d'alternateur 50 ou GCU acronyme de l'expression anglo-saxonne « Generator Control Unit ».

Le régulateur d'alternateur 50, GCU, alimente électriquement l'enroulement statorique à courant continu DC, lorsque le démarreur-générateur fonctionne en mode générateur. Cette alimentation est réalisée de façon à générer une tension U non nulle en sortie du stator de la génératrice électrique principale 10, sur la ligne 60.

Le GCU 50 n'alimente pas l'enroulement statorique à courant continu DC lorsque le démarreur-générateur fonctionne en mode démarreur. Autrement dit, le GCU, 50 est apte à être soit dans un premier état dans lequel il alimente l'enroulement statorique à courant continu DC, soit dans un deuxième état dans lequel n'alimente pas cet enroulement statorique.

Le régulateur d'alternateur 50, GCU comprend un premier régulateur 51 alimenté en courant continu et permettant de réguler la tension et/ou le courant d'alimentation de l'enroulement statorique à courant continu DC. Ce premier régulateur est alimenté électriquement au moyen d'une tension électrique triphasée issue du stator 33 de la génératrice auxiliaire 30. Le régulateur d'alternateur 50 redresse (au moyen d'un redresseur 52) et régule (au moyen du premier régulateur 51) la tension continue délivrée aux bornes de l'enroulement statorique à courant continu DC. Le premier régulateur comprend des composants de puissance pilotables, formant un hacheur, alimentés en courant continu et destinés à alimenter électriquement l'enroulement DC. Ces composants de puissance (ou hacheur) sont pilotables de façon à assurer la régulation en courant et/ou en tension. Le premier régulateur comprend une commande du hacheur pour piloter le hacheur. Une information représentative de la valeur de la tension et/ou du courant à un point de référence de la ligne d'alimentation 60 est fournie à la commande du hacheur.

En variante, la machine électrique tournante est à deux étages. Elle est dépourvue de génératrice auxiliaire et le premier régulateur 51 est par exemple alimenté électriquement au moyen du réseau de bord 202 de l'aéronef pendant la phase de génération. Le régulateur d'alternateur 50 ne comprend pas forcément le redresseur 52. En effet, il peut être alimenté en continu.

Le démarreur-générateur comprend deux lignes d'alimentation 61, 62.

Avantageusement, les lignes relient le premier régulateur et l'enroulement statorique à courant continu DC. En variante, le démarreur-générateur selon l'invention peut être vendu sans que les deux lignes ne relient le premier régulateur et l'enroulement statorique, le premier régulateur et l'enroulement statorique étant ensuite reliés via les deux lignes 61, 62 par câblage après montage sur un ou des supports de l'équipement, par exemple un aéronef, comprenant la turbomachine.

Le régulateur d'alternateur 50 est reliée électriquement, via le premier régulateur, à l'enroulement statorique à courant continu DC via les deux lignes électriques à courant continu 61, 62. Les deux lignes électriques 61, 62 relient les deux bornes B1, B2 de l'enroulement statorique à courant continu DC aux deux bornes de sortie respectives S1, S2 du régulateur d'alternateur 50, et notamment du premier régulateur 51. Autrement dit, le régulateur d'alternateur 50 permet d'alimenter électriquement l'enroulement statorique à courant continu DC via les deux lignes électriques 61, 62, c'est-à-dire d'appliquer une tension entre les deux bornes B1, B2 de l'enroulement DC. Ces lignes électriques 61, 62 sont des fils électriques.

L'enroulement statorique à courant alternatif AC est agencé de manière à induire, lorsqu'il est alimenté en courant alternatif, un courant alternatif dans l'enroulement rotorique 14 de l'excitatrice principale 10.

Le démarreur-générateur 1 comprend un régulateur démarreur nommé SBU 73, (acronyme de l'expression anglo-saxonne « start box unit ») relié ou destiné à être relié électriquement à l'enroulement statorique à courant alternatif AC et aux enroulements statoriques 12a, 12b, 12c. Le régulateur démarreur 73 alimente l'enroulement statorique à courant alternatif AC en courant alternatif monophasé et les enroulements statoriques 12a, 12b, 12c via une ligne d'alimentation polyphasée, ici triphasée, lorsque le démarreur-générateur fonctionne en mode démarreur. Cela permet d'induire des courants dans le rotor de l'excitatrice pour alimenter les enroulements rotoriques de la machine principale dont les enroulements statoriques sont alimentés pour assurer le démarrage de la turbomachine.

Le régulateur démarreur SBU 73 régule la tension et/ou le courant d'alimentation de l'enroulement statorique à courant alternatif AC et des enroulements statoriques de la machine principale 12a ,12b, 12c lorsque le démarreur générateur fonctionne en mode démarreur.

Le SBU peut être relié électriquement à l'enroulement AC et aux enroulements statoriques 12a, 12b, 12C avant ou après montage sur l'équipement tel que l'aéronef.

Le régulateur démarreur SBU 73 alimente les enroulements statoriques 12a, 12b, 12c en courant alternatif polyphasé à fréquence variable au moyen d'un onduleur triphasé 71 lorsque le démarreur générateur fonctionne en mode démarreur.

L'onduleur monophasé est avantageusement de type MLI (modulation de largeur d'impulsion) pour générer des courants sinusoïdaux à fréquence variable. Ces alimentations sont conçues pour permettre le démarrage de la turbomachine. Le régulateur démarreur 73, SBU n'alimente pas l'enroulement AC et les enroulements statoriques lorsque le démarreur-générateur fonctionne en mode générateur. Autrement dit, le régulateur démarreur 73, SBU est apte à être, soit dans un premier état dans lequel il alimente l'enroulement AC, soit dans un deuxième état dans lequel n'alimente pas cet enroulement AC. Dans le premier état le régulateur démarreur 73 alimente les enroulements statoriques 12a, 12b, 12c et dans le deuxième état, il n'alimente pas les enroulements statoriques 12a, 12b, 12c.

Le convertisseur à fréquence variable 71 ou onduleur triphasé est alimenté électriquement au moyen d'un autre générateur 72. L'autre générateur 72 peut être le réseau de bord, une batterie embarqué à bord de l'aéronef ou un groupe générateur au sol. Un capteur de position, non représenté, transmet une information de position de l'arbre 101 au convertisseur à fréquence variable 71 de façon que ce dernier asservisse le courant qu'il délivre en fonction de la position de l'arbre 101 de manière à ce que la machine électrique principale fonctionne en mode synchrone autopiloté. Autrement dit, l'alimentation du stator de la machine électrique principale dépend de la position du rotor.

Le régulateur démarreur 73 comprend également un onduleur monophasé 74 qui génère l'énergie électrique d'alimentation de l'excitatrice 20 pour le démarrage de la turbomachine. L'onduleur monophasé 74 comprend avantageusement des composants de puissances et une commande des composants de puissance afin de piloter notamment la tension délivrée par l'onduleur monophasé et éventuellement sa fréquence). L'onduleur monophasé est, par exemple, alimenté en tension par un étage redresseur du convertisseur à fréquence variable 71. En variante, l'onduleur est alimenté en tension à partir d'un réseau de bord de l'avion ou un groupe générateur au sol.

Une commande générale 80 pilote le GCU, notamment le premier régulateur 51 et le SBU, pour configurer le démarreur-générateur en mode générateur ou en mode démarreur. Elle permet de faire basculer le GCU du premier état vers le deuxième état en fonction du mode souhaité. Elle permet également de faire basculer le SBU du premier état vers le deuxième état en fonction du mode souhaité. La commande générale 80 peut être comprise dans le démarreur-générateur ou extérieur au démarreur-générateur.

Avantageusement, comme cela est expliqué dans la demande de brevet Française publiée avec le numéro FR 2 348 594, l'enroulement statorique à courant continu DC et l'enroulement statorique à courant alternatif AC sont montés sensiblement en quadrature de phase de manière à limiter la tension induite dans l'enroulement statorique à courant continu DC au cours de la phase de démarrage. Autrement dit, ce montage limite l'effet de mutuelle entre les deux enroulements. Cela permet de limiter les risques de dégradation du circuit d'excitation en courant continu (premier régulateur).

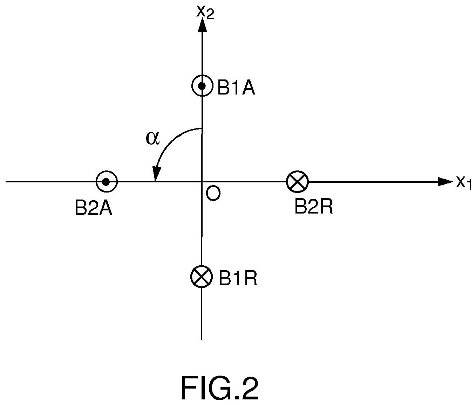

Sur la figure 2, on a représenté schématiquement un montage en quadrature de manière à expliquer ce montage.

L'enroulement statorique à courant continu DC comprend au moins une première bobine B1A, B1R comprenant une portion aller B1A et une portion retour B1R et l'enroulement statorique à courant alternatif AC comprend au moins une deuxième bobine B2A, B2R comprenant une portion aller B2A et une portion retour B2R. Chaque deuxième bobine B2A, B2R est agencée de manière à induire un courant alternatif dans l'enroulement rotorique 23a, 23b, 23c de l'excitatrice lorsque ladite bobine est mise sous tension. Avantageusement, les deux enroulements statoriques comprennent une pluralité de premières bobines et une pluralité de deuxièmes bobines.

De manière générale, chaque deuxième bobine B2A, B2R comprend un axe magnétique x2 situé sensiblement en association de quadrature de phase dans l'espace par rapport à l'axe magnétique x1 de chaque bobine B1A, B1R qui lui est adjacente . Par conséquent, si un flux magnétique est généré par une première bobine, il n'engendre théoriquement pas de flux magnétique dans la deuxième bobine adjacente dans un système idéal. Autrement dit, lors de la phase de démarrage, le champ à courant alternatif qui est engendré par l'alimentation en courant alternatif de l'enroulement statorique à courant alternatif AC n'induit théoriquement pas de tension dans l'enroulement statorique à courant continu DC qui n'est pas alimenté en courant continu par le premier régulateur 51. Ce montage limite l'effet de mutuelle entre les deux enroulements. Cela permet de limiter les risques de dégradation du circuit d'excitation en courant continu (premier régulateur).

Les axes magnétiques des premières et deuxièmes bobines sont disposés radialement par rapport à un axe (ici un axe perpendiculaire au plan de la figure 2 passant par le point O), et sont disposés dans un même plan sensiblement perpendiculaire à cet axe (ici le plan de la feuille).

Sur l'exemple de la figure 2, les enroulements AC et DC comprennent chacun une bobine et l'angle électrique formé entre la première bobine et la deuxième bobine est de Π/2.

L'angle mécanique $\alpha$ ,exprimé en radians, formé entre les bobines adjacentes des deux enroulements, dans un plan perpendiculaire à l'axe de rotation, est donné par la formule suivante :

$$\alpha = \frac{\pi}{2} * \frac{1}{N}$$

où N est le nombre de paires de pôles de l'excitatrice.

N est égal à 1 sur l'exemple représenté sur la figure 2.

Le rotor peut être à pôles saillants comme cela est décrit dans la demande de brevet FR 2 348 594 ou à pôles lisses.

Même lorsque les deux enroulements statoriques bobinés AC et DC sont agencés en association de quadrature, une tension aux bornes de l'enroulement statorique à courant continue DC est générée en phase de démarrage ce qui peut provoquer des détériorations du régulateur d'alternateur. Les flux et tensions engendrés dans l'enroulement statorique à courant continu en phase de démarrage ne sont pas annulés mais seulement minimisés.

Selon l'invention, le démarreur-générateur 1 comprend un dispositif de liaison électrique 53, 90 agencé et configuré pour établir une liaison électrique entre les deux lignes électriques à courant continu 61, 62 lorsque le démarreur-générateur selon l'invention fonctionne en mode démarreur. Autrement dit, le dispositif de liaison électrique 53, 90 est agencé et configuré pour établir la liaison électrique entre les deux lignes électriques 61, 62 lorsque le régulateur démarreur 73 alimente l'enroulement rotorique à courant alternatif AC en courant alternatif. La liaison électrique entre les lignes électriques 61, 62 est établie entre l'enroulement statorique à courant continu DC et le régulateur d'alternateur et notamment le premier régulateur 51. La liaison électrique est réalisée au moyen d'un élément de liaison relié aux deux lignes électriques 61, 62 et monté en parallèle avec l'enroulement DC.

Le dispositif de liaison électrique 53, 90 permet de mettre en court-circuit partiel ou complet les deux lignes électriques à courant continu 61, 62, reliant électriquement le régulateur d'alternateur et les deux bornes B1 et B2 respectives de l'enroulement statorique à courant continu DC entre lesquels le régulateur d'alternateur 50, GCU est destiné à alimenter l'enroulement DC. Ce dispositif de liaison 53, 90 est monté en parallèle avec l'enroulement statorique à courant continu DC, entre l'enroulement DC et le premier régulateur 51. L'établissement de la liaison électrique pendant la phase de démarrage génère un courant de circulation (ou courant de court-circuit entre les deux lignes 61, 62) ce qui permet de limiter le niveau de tension générée, par l'enroulement statorique à courant alternatif AC, via l'enroulement DC, aux bornes de sortie S1, S2 du régulateur d'alternateur 50, GCU, en phase de démarrage. Le dispositif de liaison 53, 90 selon l'invention permet de protéger régulateur d'alternateur 50, GCU et notamment le premier régulateur 51, contre les surtensions. Ainsi la puissance dissipée dans le régulateur d'alternateur 50, GCU, et dans l'enroulement statorique à courant continu DC est réduite. En d'autres termes, le dispositif selon l'invention limite l'effet du flux de fuite provenant de l'enroulement statorique à courant alternatif AC. Il permet, lorsque le démarreur-générateur 1 fonctionne en mode démarreur, de soumettre le régulateur d'alternateur 50, GCU, entre ses deux bornes de sortie S1, S2, à une tension inférieure à la tension à laquelle il serait soumis si le générateur était dépourvu du dispositif de liaison. Cela permet d'éviter la réduction du ratio du nombre de spires entre le rotor et le stator de l'excitatrice ce qui permet de conserver un gain élevé et cela permet d'éviter le surdimensionnement des lignes d'alimentation 61, 62 et du régulateur d'alternateur 50, GCU, car les courants véhiculés par les lignes d'alimentation restent faibles.

Le dispositif de liaison est avantageusement choisi de façon que la tension appliquée aux bornes de sorties S1, S2 du régulateur d'alternateur 50, GCU, est inférieure à une tension maximale correspondant à la tension maximale à laquelle le régulateur d'alternateur 50, GCU, peut résister sans détérioration, pendant la phase de démarrage, au moins tant que l'enroulement statorique à courant alternatif AC est alimenté en courant alternatif par le deuxième régulateur.

Dans l'exemple représenté sur la figure 1, l'élément de liaison 90 est relié électriquement, d'une part à une première ligne 61 et d'autre part à une deuxième ligne 62. Il est monté en parallèle avec l'enroulement DC. L'élément de liaison 90 est relié aux lignes 61 et 62, entre l'enroulement statorique à courant continu DC et le premier régulateur 51. Dans l'exemple représenté, l'élément de liaison 90 est disposé entre le régulateur d'alternateur 50, GCU et l'enroulement DC. L'élément de liaison 90 peut aussi être avantageusement inclus dans le régulateur 50, GCU comme nous le verrons par la suite.

L'élément de liaison 90 permet, lorsqu'il est dans un premier état fermé, d'établir une liaison électrique entre la première ligne 61 et la deuxième ligne 62 et permet, lorsqu'il est dans un deuxième état ouvert, de supprimer cette liaison électrique, c'est-à-dire de séparer électriquement les deux lignes 61 et 62.

Le démarreur-générateur comprend en outre une commande 53 permettant de piloter le passage (ou basculement) de l'élément de liaison 90 du premier état fermé au deuxième état ouvert et inversement. La commande 53 est configurée pour mettre l'élément de liaison dans le premier état fermé lorsque le démarreur-générateur fonctionne en mode démarreur et plus précisément lorsque l'enroulement statorique à courant alternatif AC est alimenté en courant alternatif par le régulateur démarreur 73. De préférence, la commande est configurée de façon à mettre l'élément de liaison dans le premier état fermé pendant toute la durée pendant laquelle l'enroulement statorique à courant alternatif AC est alimenté en courant alternatif par le régulateur démarreur 73. La commande 53 est avantageusement configurée pour mettre l'élément de liaison 90 dans le deuxième état ouvert lorsque le démarreur-générateur 1 fonctionne en mode générateur, de préférence pendant toute la durée pendant laquelle le démarreur-générateur 1 fonctionne en mode générateur. Ce dispositif de liaison permet de limiter de façon drastique la tension délivrée en sortie du premier régulateur en phase de démarrage car, lorsque l'élément de liaison est dans l'état fermé, les deux lignes 61, 62 sont en court-circuit sensiblement complet ou complet, et dissipe pas ou peu d'énergie en mode générateur. Par ailleurs, en établissant la liaison électrique entre les deux lignes 61 et 62 pendant toute la durée d'alimentation de l'enroulement AC en courant alternatif, par exemple, pendant toute la durée de la phase de démarrage, cette solution est simple à mettre en œuvre. Cela est également le cas du deuxième mode de réalisation qui sera décrit ultérieurement.

La commande 53 peut être configurée pour faire passer l'élément de liaison 90 du premier état fermé au deuxième état ouvert au moment où le GCU passe du deuxième état au premier état, c'est-à-dire lors de la transition du mode démarrage au mode génération.

En variante, la commande 53 est configurée pour faire passer l'élément 90 du deuxième état ouvert au premier état fermé au moment où le SBU passe du deuxième état au premier état.

Sur la réalisation de la figure 1, la commande 53 est comprise dans le GCU. Elle peut être une commande dédiée (comme représenté sur la figure 1) ou être la commande du hacheur. En variante, la commande 53 est extérieure au GCU.

Lorsque le démarreur-générateur fonctionne en mode générateur, seul l'enroulement statorique à courant continu DC est alimenté électriquement et l'élément de liaison 90 est en position ouverte. Il doit alors supporter une tension de 11 Volts dans l'exemple numérique précité. Lorsque démarreur-générateur fonctionne en mode démarreur, l'élément de liaison 90 est dans l'état fermé et le courant de circulation est alors de 2A dans notre exemple numérique. Ce courant est tout à fait acceptable d'un point de vue échauffement puisqu'il est inférieur au courant d'alimentation nominal en mode générateur qui est de 2,4 A. Toutefois cela n'est pas indispensable tant que le courant est compatible des fils électriques et de l'élément de liaison. L'élément de liaison peut présenter un petit gabarit car il est dimensionné pour une tension plus faible et avantageusement pour un courant plus faible.

Sur la réalisation de la figure 1, l'élément de liaison 90 est un contacteur. De manière générale, l'élément de liaison est un interrupteur. Il est du type mécanique ou électromécanique. Il s'agit par exemple d'un contacteur ou d'un relais électromécanique. En variante, l'interrupteur est du type électronique. Il s'agit par exemple d'un transistor.

La figure 3 représente un démarreur-générateur 110 selon un deuxième mode de réalisation, qui diffère du démarreur-générateur selon le premier mode de réalisation représenté sur la figure 1 en ce que le dispositif de liaison est différent. Dans ce deuxième mode de réalisation, le dispositif de liaison électrique comprend un élément de liaison réalisé sous la forme d'un conducteur ohmique 900 relié électriquement d'une part à la première ligne à courant continu 61 et d'autre part à la deuxième ligne à courant continu 62 entre l'enroulement statorique à courant continu DC et le GCU, 500, ou premier régulateur 51. Autrement dit le conducteur ohmique 900 est monté en parallèle avec l'enroulement statorique à courant continu DC. Il est monté en parallèle avec l'enroulement DC entre l'enroulement DC et le premier régulateur 51. Sur la réalisation de la figure 3, il est monté entre le GCU 500 et l'enroulement DC. L'élément 900 peut être avantageusement inclus dans le régulateur 500, GCU. Ce mode de réalisation présente l'avantage de ne pas nécessiter de pilotage pour assurer la fonction de liaison électrique entre les deux lignes 61, 62 en mode démarreur tout en permettant l'application d'une différence de potentielle entre les bornes de l'enroulement statorique générateur DC en mode générateur de façon à générer la tension souhaitée au stator de la machine électrique principale. Ce dispositif de liaison ne comprend pas de commande. Il est donc fiable. Il présente en outre l'avantage d'être moins coûteux qu'un dispositif de liaison comprenant un contacteur. En revanche, de l'énergie est dissipée par le conducteur ohmique en mode générateur. Le GCU doit donc fournir une énergie supplémentaire en mode générateur pour que la machine électrique principale 10 délivre la tension souhaitée en sortie de son stator.

Dans l'exemple représenté le conducteur ohmique 900 est formé d'un seul conducteur ohmique individuel. En variante, le conducteur ohmique comprend plusieurs conducteurs ohmiques individuels connectés en parallèle ou en série.

Si, dans l'exemple numérique précité, la résistance du conducteur ohmique 900 a une valeur de 20 Ohms, alors, lorsque le démarreur-générateur 1 fonctionne en mode générateur, le conducteur ohmique 900 est soumis à une tension de 11V et doit dissiper 6W ce qui n'est ni un problème pour un conducteur ohmique 900 ni un problème pour le premier régulateur 51 qui doit fournir 23% de puissance supplémentaire pour un courant de 2,4 A et un résistance de l'enroulement d'excitation DC de 4,5 Ohms. Lorsque le démarreur-générateur 1 fonctionne en mode démarreur, le courant généré par l'enroulement statorique démarreur AC dans la résistance 900 est alors de 0.8 A. La puissance dissipée par le conducteur ohmique est alors de 12W et la tension vue aux bornes du premier régulateur 51 est alors de 16V qui est tout à fait supportable sans sur dimensionner le régulateur.

De manière préférentielle, la résistance électrique du conducteur ohmique est supérieure à celle de l'enroulement statorique à courant continu DC. Cela permet de limiter les dissipations d'énergie électrique dans la résistance en mode générateur et l'augmentation consécutive de la puissance devant être délivrée par le GCU 50 en mode générateur. Par ailleurs, cela permet d'assurer la fonction de protection du GCU 50 en provoquant une réduction suffisante de la tension aux bornes du premier enroulement statorique en phase de démarrage. Toutefois, on peut tout à fait envisager un mode de réalisation dans lequel la résistance électrique du conducteur ohmique est inférieure ou égale à celle de l'enroulement statorique à courant continu DC dans un cas où la limitation des surtensions aux bornes du GCU, notamment aux bornes du premier régulateur 51, est capitale par rapport à la limitation de la dissipation de l'énergie électrique.

Sur les réalisations non limitative des figures 1 et 3, le régulateur d'alternateur GCU, 50 comprend un premier boîtier 54. Le premier régulateur 51 et l'éventuel redresseur 52 sont logés dans le boîtier 54.Le premier régulateur 51 et l'éventuel redresseur et le premier support 54 forment une carte électronique comprenant le substrat, les pistes conductrices du circuit imprimé et les composantes de puissance compris dans le premier régulateur et l'éventuel redresseur. En variante, le support 54 est un boîtier logeant les éléments précités. Le boîtier assure la fonction de support et de protection des éléments précités. Sur la réalisation des figures, le GCU est situé à l'extérieur du carter 150.

Sur la réalisation des figures 1 et 3, le GCU et la machine tournante forment deux objets, c'est à dire ou assemblages indépendantes, reliés ou destinés à être reliés électriquement entre eux. Autrement dit, ils sont destinés à être montés séparément sur un support ou des supports respectifs distincts de l'équipement comprenant la turbomachine, par exemple un aéronef. Ils peuvent être montés sur des supports différents de l'équipement qui ne sont pas forcément fixes les uns par rapport aux autres.

Sur la réalisation des figures 1 et 3 l'élément de liaison 90, 900 est disposé à l'extérieur du boîtier 54. Le carter 150, le GCU et l'élément de liaison sont mobiles les uns par rapport aux autres avant fixation à un ou des supports de l'équipement comprenant la turbomachine. Autrement dit, ils forment des objets, c'est-à-dire deux assemblages indépendants, destinés à être reliés électriquement ou reliés électriquement entre eux. Ils sont donc destinés à être montés en deux étapes distinctes sur un ou des supports de l'équipement recevant la turbomachine. Ils peuvent être fixés à des supports respectifs distincts de l'équipement ou aéronef.

Avantageusement, l'élément de liaison 90 ou 900 est fixé au GCU (avant montage sur l'équipement). Autrement dit, le GCU est muni de l'élément de liaison. De la sorte, l'élément de liaison et le GCU sont destinés à être fixés à un support de l'équipement comprenant la turbomachine lors d'une même étape de montage. Le GCU et l'élément de liaison peuvent aussi être reliés électriquement à l'enroulement DC lors d'une même étape de câblage. L'élément de liaison est par exemple fixé au support de l'équipement par l'intermédiaire du GCU. Cela permet de faciliter le montage et la maintenance de cet ensemble.

Un ensemble de régulation comprend le régulateur d'alternateur et l'élément de liaison. Avantageusement, l'ensemble de régulation et la machine tournante forment deux objets, c'est-à-dire deux assemblages indépendants, reliés électriquement ou destinés à être reliés électriquement entre eux. Ces objets sont destinés à être montés séparément sur un support ou plusieurs supports de l'équipement comprenant la turbomachine. On peut ainsi monter le carter et l'ensemble de régulation en deux endroits distincts de l'équipement comprenant la turbomachine. Cela permet de fiabiliser la liaison électrique entre ces éléments en permettant de s'affranchir de l'environnement contraignant de la zone où est placée la machine tournante 100. Avantageusement, le carter et l'ensemble de régulation, une fois montés sur l'équipement, sont fixés l'un à l'autre par l'intermédiaire d'un ou plusieurs supports de l'équipement.

Avantageusement, l'élément de liaison 90, 900 est disposé ou logé à l'intérieur du boîtier 54. Cela permet d'éviter l'installation de câbles entre le GCU et l'élément de liaison 90, 900, facilite le montage du dispositif et assure la protection de l'élément de liaison de façon compacte. En variante l'élément de liaison est disposé à l'extérieur du boîtier.

Avantageusement, pour les mêmes raisons, la commande 53 est fixée au GCU. Elle fait alors partie de l'ensemble de régulation. Elle est avantageusement logée à l'intérieur du boîtier 54. La commande pourrait être disposée en dehors du boîtier 54.

De façon encore plus avantageuse, le premier régulateur 51 est formé de composants de puissance reliés électriquement par des pistes conductrices formées sur un circuit imprimé, l'élément de liaison 90, 900 étant rapporté sur le circuit imprimé. De préférence l'élément de liaison est rapporté sur le circuit imprimé. Il est avantageusement relié électriquement au premier régulateur 51 au moyen de pistes du circuit imprimé. Cela permet de fiabiliser les liaisons électriques entre le premier régulateur 51 et l'élément de liaison.

Sur l'exemple de la figure 3, le SBU forme un objet séparé du GCU et de la machine tournante relié ou destiné à être relié électriquement à la machine tournante. Il est logé dans un autre support 75 séparé du carter 150 et du support 54. Dans un mode particulier de réalisation, l'onduleur monophasé 74 et/ou l'onduleur triphasé 71 sont fixés au GCU. Plus précisément, le GCU est muni de l'élément de liaison. De la sorte, l'onduleur monophasé 74 et/ou l'onduleur triphasé 71 fixés au GCU font partie de l'ensemble de régulation. L'onduleur monophasé 74 et/ou l'onduleur triphasé 71 sont par exemple logés dans le boitier.

Dans un mode particulier de réalisation, l'onduleur monophasé et/ou l'onduleur triphasé sont formés de composants de puissance rapportés sur le circuit imprimé. Ils sont reliés électriquement par des pistes conductrices formées sur le même circuit imprimé que le premier régulateur.

Sur la réalisation de la figure 3, le GCU est situé à l'extérieur du carter 150. Le GCU et l'enroulement DC sont donc reliés ou destinés à être reliés au moyen des deux lignes 61 et 62 qui s'étendent entre les deux supports 54 et 150, c'est-à-dire qui relient les deux supports 54, 150.

Avantageusement, l'élément de liaison 90 ou 900 est fixé au carter 150. Plus précisément, la machine tournante est munie de l'élément de liaison 90 ou 900 qui est fixé au carter 150. De la sorte, l'élément de liaison et la machine tournante sont destinés à être montés sur un support de l'équipement comprenant la turbomachine lors d'une même étape de montage. L'élément de liaison est fixé au support de l'équipement par l'intermédiaire du carter 150. L'enroulement DC et l'élément de liaison peuvent aussi être reliés électriquement au GCU lors d'une même étape de câblage. Cela permet également de faciliter le montage du démarreur-générateur sur un aéronef. L'élément de liaison peut être fixé à l'extérieur du carter, cela facilite la maintenance de l'élément de liaison. En variante, l'élément de liaison est logé dans le carter 150.

Le démarreur-générateur comprend un ensemble de transformation comprenant la machine tournante et l'élément de liaison fixé au carter. Avantageusement, l'ensemble de transformation et le régulateur d'alternateur formant deux objets reliés électriquement ou destinés à être reliés électriquement entre eux. Ils sont destinés à être montés séparément sur un support ou des supports respectifs distincts de l'équipement comprenant la turbomachine.

En variante, le GCU peut être fixé au carter 150. De la sorte ces éléments peuvent être montés sur un support de l'équipement comprenant la turbomachine lors d'une même étape de montage. Le GCU est alors fixé au support de l'équipement par l'intermédiaire du carter 150. Le GCU peut être disposé à l'intérieur ou à l'extérieur du carter.

Avantageusement, lorsque l'élément de liaison est fixé au GCU, l'élément de liaison est fixé au carter par l'intermédiaire du GCU. L'ensemble GCU, élément de liaison et machine tournante forme un bloc pouvant être rapporté sur l'équipement lors d'une même étape de montage. Cela facilite le donc le montage du démarreur-générateur sur l'équipement.

Par exemple, l'élément de liaison est rapporté sur le circuit imprimé du GCU et est fixé au carter par l'intermédiaire dudit circuit imprimé du GCU. Autrement dit, le circuit imprimé ou le substrat du circuit imprimé est rapporté sur le carter. En variante, lorsque l'élément de liaison est logé dans le boîtier du GCU, l'élément de liaison peut être fixé au carter par l'intermédiaire du boîtier.

La description des possibilités d'agencement de l'élément de liaison par rapport au carter et au GCU est aussi valable pour la commande 53. La commande 53 peut par exemple faire partie de l'ensemble de régulation ou de transformation.

L'invention se rapporte également à un ensemble comprenant un équipement recevant la turbomachine et comprenant un démarreur-générateur monté sur un support de l'équipement et dont le rotor de la machine principale est couplé à la turbomachine.

Le régulateur d'alternateur GCU, 50 et le régulateur démarreur SBU 71 comprennent classiquement des composants de puissance, comme par exemple des MOS ou des IGBTs, et éventuellement une commande pour piloter les éléments de puissance ou pour piloter le contacteur. En variante, ces commandes peuvent être externes au GCU et/ou au SBU. Ces commandes peuvent comprendre un ou plusieurs circuits électroniques dédiés ou un circuit à usage général. Chaque circuit électronique peut comprendre une machine de calcul reprogrammable (un processeur ou un microcontrôleur par exemple) et/ ou un calculateur exécutant un programme comprenant une séquence d'instructions et/ou une machine de calcul dédiée (par exemple un ensemble de portes logiques comme un FPGA un DSP ou un ASIC, ou tout autre module matériel). Le régulateur d'alternateur et le régulateur démarreur peuvent également comprendre au moins une alimentation pour alimenter la commande.

La commande générale ou dispositif de pilotage général peut comprendre une machine de calcul reprogrammable (un processeur ou un microcontrôleur par exemple) et/ ou au moins un calculateur exécutant un programme comprenant une séquence d'instructions et/ou une machine de calcul dédiée (par exemple un ensemble de portes logiques comme un FPGA un DSP ou un ASIC, ou tout autre module matériel).

**Revendications**

1. Démarreur-générateur sans balais (1), ledit démarreur-générateur étant apte à fonctionner en mode démarreur, de façon à entraîner en rotation un arbre (201) pour démarrer une turbomachine (200), ou en mode générateur électrique synchrone, de façon à transformer en une énergie électrique une énergie mécanique fournie par la turbomachine (200), le démarreur-générateur (1) comprenant :

   - une machine électrique principale (10) ayant un stator (11) comprenant des enroulements statoriques (12a, 12b, 12c) et un rotor (13) comprenant un enroulement rotorique (14),
   - un redresseur tournant (40),
   - une excitatrice (20) comprenant un stator (21) comprenant un enroulement statorique à courant continu (DC) et un enroulement statorique à courant alternatif (AC), et un rotor (22) comprenant des enroulements rotoriques (23a, 23b, 23c) reliés à l'enroulement rotorique (14) de la machine électrique principale (10) via le redresseur tournant (40), les rotors de la machine électrique principale (10) et de l'excitatrice (20) étant destinés à être couplés mécaniquement à la turbomachine (200),
   - un régulateur d'alternateur (50) destiné à être relié à l'enroulement statorique à courant continu (DC) via la première et la deuxième lignes électriques à courant continu (61, 62) et destiné à alimenter électriquement l'enroulement statorique à courant continu (DC) lorsque le démarreur-générateur fonctionne en mode générateur afin de générer une tension électrique en sortie du stator (11) de la machine électrique principale (10),
   - un régulateur-démarreur SBU (73) destiné à alimenter électriquement l'enroulement statorique à courant alternatif (AC) et les enroulements statoriques de la machine électrique principale, lorsque le démarreur générateur fonctionne en mode démarreur,
   **caractérisé en ce qu'**il comprend un dispositif de liaison électrique (90, 900) agencé et configuré pour établir une liaison électrique entre les deux lignes électriques (61, 62) lorsque le démarreur-générateur (1) fonctionne en mode démarreur.

2. Démarreur-générateur selon la revendication précédente, dans lequel le dispositif de liaison électrique est configuré pour établir une liaison électrique entre les deux lignes électriques (61, 62) pendant toute la durée pendant laquelle l'enroulement statorique à courant alternatif AC est alimenté en courant alternatif par le régulateur démarreur (73).

3. Démarreur-générateur selon l'une quelconque des revendications précédentes, dans lequel le dispositif de liaison comprend un élément de liaison (90) relié électriquement d'une part à la première ligne électrique (61) et d'autre part à la deuxième ligne électrique (62) et permettant, lorsqu'il est dans un premier état fermé, d'établir une liaison électrique entre la première ligne électrique (61) et la deuxième ligne électrique (62) et, lorsqu'il est dans un deuxième état ouvert, de supprimer cette liaison électrique entre la première ligne (B1) et la deuxième ligne (B2).

4. Démarreur-générateur selon la revendication précédente, dans lequel le dispositif de liaison comprend une commande (53) permettant de piloter le basculement de l'élément de liaison (90) entre le premier état fermé et le deuxième état ouvert, la commande (53) étant configurée pour mettre l'élément de liaison dans le premier état fermé lorsque le démarreur-générateur (1) fonctionne en mode démarreur et pour mettre l'élément de liaison (90) dans le deuxième état ouvert lorsque le démarreur-générateur fonctionne en mode générateur.

5. Démarreur-générateur selon l'une quelconque des revendications 1 à 2, dans lequel le dispositif de liaison comprend un élément de liaison comprenant un conducteur ohmique (900) relié électriquement d'une part à la première ligne électrique (61) et d'autre part à la deuxième ligne électrique (62).

**6.** Démarreur-générateur selon la revendication précédente, dans lequel la résistance électrique du conducteur ohmique (900) est supérieure à celle de l'enroulement statorique à courant continu (DC).

**7.** Démarreur-générateur selon l'une quelconque des revendications précédentes, dans lequel le dispositif de liaison comprend un élément de liaison relié d'une part à la première ligne électrique (61) et d'autre part à la deuxième ligne électrique (62), et dans lequel l'élément de liaison est fixé au régulateur d'alternateur.

**8.** Démarreur-générateur selon la revendication précédente, comprenant une machine tournante comprenant la machine principale, l'excitatrice et un carter renfermant la machine principale et l'excitatrice, ledit démarreur-générateur comprenant un ensemble de régulation comprenant le régulateur d'alternateur et l'élément de liaison, l'ensemble de régulation et la machine tournante formant deux objets reliés électriquement ou destinés à être reliés électriquement entre eux.

**9.** Démarreur-générateur selon l'une quelconque des revendications 7 à 8, dans lequel le régulateur d'alternateur (50) comprend un premier régulateur (51) permettant de réguler la tension et/ou le courant d'alimentation de l'enroulement statorique à courant continu, le premier régulateur comprenant des composants de puissance reliés électriquement entre eux par des pistes conductrices formées sur un circuit imprimé, l'élément de liaison étant rapporté sur le circuit imprimé.

**10.** Démarreur-générateur selon l'une quelconque des revendications 7 à 8, dans lequel le dispositif de liaison comprend un élément de liaison relié d'une part à la première ligne électrique (61) et d'autre part à la deuxième ligne électrique (62), et dans lequel le régulateur d'alternateur (50) comprend un premier support (54) et un premier régulateur (51) alimenté en courant continu et permettant de réguler la tension et/ou le courant d'alimentation de l'enroulement statorique à courant continu, dans lequel le premier support (54) est un boîtier logeant le premier régulateur (51) et l'élément de liaison.

**11.** Démarreur-générateur selon l'une quelconque des revendications 7 à 10, dans lequel le régulateur-démarreur comprend un onduleur monophasé (74) et un onduleur triphasé (71) fixés au régulateur d'alternateur.

**12.** Démarreur-générateur selon l'une quelconque des revendications précédentes, comprenant une machine tournante comprenant la machine électrique principale et l'excitatrice et un carter (150) logeant la machine électrique principale et l'excitatrice, dans lequel le dispositif de liaison comprend un élément de liaison relié d'une part à la première ligne électrique (61) et d'autre part à la deuxième ligne électrique (62), l'élément de liaison étant fixé au carter.

**13.** Démarreur-générateur selon la revendication précédente, dans lequel l'élément de liaison est logé dans le carter.

**14.** Démarreur-générateur selon l'une quelconque des revendications 12 à 13, comprenant un ensemble de transformation comprenant la machine tournante et l'élément de liaison, l'ensemble de transformation et le régulateur d'alternateur formant deux objets reliés électriquement ou destinés à être reliés électriquement entre eux.

**15.** Démarreur-générateur selon l'une quelconque des revendications 12 à 13 en ce qu'elles dépendent de la revendication 6, dans lequel le régulateur d'alternateur est fixé au carter.

**16.** Démarreur-générateur selon la revendication 14, en ce qu'elle dépend de la revendication 7, dans lequel l'élément de liaison est fixé au carter par l'intermédiaire dudit circuit imprimé ou du boîtier.

**17.** Démarreur-générateur selon l'une quelconque des revendications précédentes, dans lequel l'enroulement statorique à courant continu (DC) et l'enroulement statorique à courant alternatif (AC) sont montés sensiblement en quadrature de phase de manière à limiter la tension induite dans l'enroulement statorique à courant continu (DC) lorsque le démarreur-générateur fonctionne en mode démarreur.

**Patentansprüche**

**1.** Bürstenloser Starter-Generator (1), wobei der Starter-Generator im Starter-Modus, um eine Welle (201) in Drehung zu versetzen, um eine Turbomaschine (200) zu starten, oder im synchronen elektrischen Generator-Modus arbeiten kann, um von der Turbomaschine (200) gelieferte mechanische Energie in elektrische Energie umzuwandeln, wobei der Starter-Generator (1) Folgendes umfasst:

- eine elektrische Hauptmaschine (10) mit einem Stator (11), der Statorwicklungen (12a, 12b, 12c) umfasst, und einem Rotor (13), der eine Rotorwicklung (14) umfasst,
- einen rotierenden Gleichrichter (40),
- einen Erreger (20) mit einem Stator (21), der eine Gleichstrom-(DC)-Statorwicklung und eine Wechselstrom-(AC)-Statorwicklung umfasst, und einem Rotor (22), der Rotorwicklungen (23a, 23b, 23c) umfasst, die über den rotierenden Gleichrichter (40) mit der Rotorwicklung (14) der elektrischen Hauptmaschine (10) verbunden sind, wobei die Rotoren der elektrischen Hauptmaschine (10) und der Erreger (20) zum mechanischen Koppeln mit der Turbomaschine (200) bestimmt sind,

- einen Generatorregler (50) zum Verbinden mit der Gleichstrom-(DC)-Statorwicklung über die erste und zweite Gleichstromleitung (61, 62) und zum Versorgen der Gleichstrom-(DC)-Statorwicklung mit Strom, wenn der Generator-Starter im Generatormodus arbeitet, um eine elektrische Spannung am Ausgang des Stators (11) der elektrischen Hauptmaschine (10) zu erzeugen,

- einen Starterregler SBU (73) zum Versorgen der Wechselstrom-(AC)-Statorwicklung und der Statorwicklungen der elektrischen Hauptmaschine mit Strom, wenn der Starter-Generator im Startermodus arbeitet,

**dadurch gekennzeichnet, dass** er eine elektrische Verbindungsvorrichtung (90, 900) umfasst, die zum Herstellen einer elektrischen Verbindung zwischen den beiden Stromleitungen (61, 62) ausgelegt und konfiguriert ist, wenn der Starter-Generator (1) im Startermodus arbeitet.

2. Starter-Generator nach dem vorherigen Anspruch, wobei die elektrische Verbindungsvorrichtung zum Herstellen einer elektrischen Verbindung zwischen den beiden Stromleitungen (61, 62) für die gesamte Zeit konfiguriert ist, während der die Wechselstrom-(AC)-Statorwicklung vom Starterregler (73) mit Wechselstrom versorgt wird.

3. Starter-Generator nach einem der vorherigen Ansprüche, wobei die Verbindungsvorrichtung ein Verbindungselement (90) umfasst, das einerseits mit der ersten Stromleitung (61) und andererseits mit der zweiten Stromleitung (62) elektrisch verbunden ist und es zulässt, in einem ersten geschlossenen Zustand eine elektrische Verbindung zwischen der ersten Stromleitung (61) und der zweiten Stromleitung (62) herzustellen und in einem zweiten offenen Zustand diese elektrische Verbindung zwischen der ersten Leitung (B1) und der zweiten Leitung (B2) zu trennen.

4. Starter-Generator nach dem vorherigen Anspruch, wobei die Verbindungsvorrichtung eine Steuerung (53) zum Steuern des Schaltens des Verbindungselements (90) zwischen dem ersten geschlossenen Zustand und dem zweiten offenen Zustand umfasst, wobei die Steuerung (53) zum Setzen des Verbindungselements in den ersten geschlossenen Zustand, wenn der Starter-Generator (1) im Starter-Modus arbeitet, und zum Setzen des Verbindungselement (90) in den zweiten offenen Zustand konfiguriert ist, wenn der Starter-Generator im Generator-Modus arbeitet.

5. Starter-Generator nach einem der Ansprüche 1 bis 2, wobei die Verbindungsvorrichtung ein Verbindungselement mit einem ohmschen Leiter (900) umfasst, der einerseits mit der ersten Stromleitung (61) und andererseits mit der zweiten Stromleitung (62) elektrisch verbunden ist.

6. Starter-Generator nach dem vorherigen Anspruch, wobei der elektrische Widerstand des ohmschen Leiters (900) größer ist als der der Gleichstrom-(DC)-Statorwicklung.

7. Starter-Generator nach einem der vorherigen Ansprüche, wobei die Verbindungsvorrichtung ein Verbindungselement umfasst, das einerseits mit der ersten Stromleitung (61) und andererseits mit der zweiten Stromleitung (62) verbunden ist, und wobei das Verbindungselement am Generatorregler befestigt ist.

8. Starter-Generator nach dem vorherigen Anspruch mit einer rotierenden Maschine, die die Hauptmaschine, den Erreger und ein die Hauptmaschine und den Erreger umschließendes Gehäuse umfasst, wobei der Starter-Generator eine Regulieranordnung mit dem Generatorregler und dem Verbindungselement umfasst, wobei die Regulieranordnung und die rotierende Maschine zwei Objekte bilden, die elektrisch miteinander verbunden oder zum elektrischen Verbinden miteinander bestimmt sind.

9. Starter-Generator nach einem der Ansprüche 7 bis 8, wobei der Generatorregler (50) einen ersten Regler (51) zum Regeln der Versorgungsspannung und/oder des Versorgungsstroms der Gleichstrom-Statorwicklung umfasst, wobei der erste Regler Leistungskomponenten umfasst, die auf einer Leiterplatte ausgebildete Leiterbahnen elektrisch miteinander verbunden sind, wobei das Verbindungselement auf der Leiterplatte montiert ist.

10. Starter-Generator nach einem der Ansprüche 7 bis 8, wobei die Verbindungsvorrichtung ein Verbindungselement umfasst, das einerseits mit der ersten Stromleitung (61) und andererseits mit der zweiten Stromleitung (62) verbunden ist, und wobei der Generatorregler (50) einen ersten Träger (54) und einen ersten Regler (51) umfasst, der mit Gleichstrom versorgt wird und es zulässt, die Versorgungsspannung und/oder den Versorgungsstrom der Gleichstrom-Statorwicklung zu regeln, wobei der erste Träger (54) eine Einhausung ist, die den ersten Regler (51) und das Verbindungselement aufnimmt.

**11.** Starter-Generator nach einem der Ansprüche 7 bis 10, wobei der Starterregler einen einphasigen Wechselrichter (74) und einen dreiphasigen Wechselrichter (71) umfasst, die am Generatorregler befestigt sind.

**12.** Starter-Generator nach einem der vorherigen Ansprüche mit einer rotierenden Maschine, die die elektrische Hauptmaschine und den Erreger umfasst, und einem Gehäuse (150), das die elektrische Hauptmaschine und den Erreger aufnimmt, wobei die Verbindungsvorrichtung ein Verbindungselement umfasst, das einerseits mit der ersten Stromleitung (61) und andererseits mit der zweiten Stromleitung (62) verbunden ist, wobei das Verbindungselement an dem Gehäuse befestigt ist.

**13.** Starter-Generator nach dem vorherigen Anspruch, wobei das Verbindungselement im Gehäuse untergebracht ist.

**14.** Starter-Generator nach einem der Ansprüche 12 bis 13 mit einer Transformationsanordnung, die die rotierende Maschine und das Verbindungselement umfasst, wobei die Transformationsanordnung und der Generatorregler zwei Objekte bilden, die elektrisch verbunden oder zum elektrischen Verbinden miteinander bestimmt sind.

**15.** Starter-Generator nach einem der Ansprüche 12 bis 13 in Abhängigkeit von Anspruch 6, wobei der Generatorregler am Gehäuse befestigt ist.

**16.** Starter-Generator nach Anspruch 14 in Abhängigkeit von Anspruch 7, wobei das Verbindungselement über die Leiterplatte oder die Einhausung am Gehäuse befestigt ist.

**17.** Starter-Generator nach einem der vorherigen Ansprüche, wobei die Gleichstrom-(DC)-Statorwicklung und die Wechselstrom-(AC)-Statorwicklung im Wesentlichen in Phasenquadratur montiert sind, um die in der Gleichstrom-(DC)-Statorwicklung induzierte Spannung zu begrenzen, wenn der Starter-Generator im Starterbetrieb arbeitet.

**Claims**

**1.** A brushless starter-generator (1), said starter-generator being capable of operating in starter mode so as to rotate said shaft (201) in order to start a turbomachine (200), or in synchronous electric generator mode so as to transform mechanical energy delivered by the turbomachine (200) into electrical energy, the starter-generator (1) comprising:

- a main electric machine (10) having a stator (11) comprising stator windings (12a, 12b, 12c) and a rotor (13) comprising a rotor winding (14);
- a rotary rectifier (40);
- an exciter (20) comprising a stator (21), comprising a direct-current (DC) stator winding and an alternating-current (AC) stator winding, and a rotor (22), comprising rotor windings (23a, 23b, 23c) that are connected to the rotor winding (14) of the main electric machine (10) via the rotary rectifier (40), the rotors of the main electric machine (10) and of the exciter (20) being intended to be mechanically coupled to the turbomachine (200);
- an alternator regulator (50) that is intended to be connected to the direct-current (DC) stator winding via the first and second direct-current electrical lines (61, 62) and intended to supply electrical power to the direct-current (DC) stator winding when the starter-generator is operating in generator mode in order to generate an electrical voltage at the output of the stator (11) of the main electric machine (10);
- an SBU starter-regulator (73) that is intended to supply electrical power to the alternating-current (AC) stator winding and the stator windings of the main electric machine when the starter-generator is operating in starter mode, **characterized in that** it comprises an electrical connection device (90, 900) that is arranged and configured to establish an electrical connection between the two electrical lines (61, 62) when the starter-generator (1) is operating in starter mode.

**2.** The starter-generator according to the preceding claim, wherein the electrical connection device is configured to establish an electrical connection between the two electrical lines (61, 62) over the entire duration over which the alternating-current AC stator winding is being supplied with alternating current by the starter-regulator (73).

**3.** The starter-generator according to any one of the preceding claims, wherein the connection device comprises a connection element (90) that is electrically connected on the one hand to the first electrical line (61) and on the other hand to the second electrical line (62) and allows, when it is in a first, closed state, an electrical connection to be established between the first electrical line (61) and the second electrical line (62) and, when it is in a second, open state, this electrical connection between the first line (B1) and the second line (B2) to be removed.

**4.** The starter-generator according to the preceding claim, wherein the connection device comprises a control means (53) allowing the switching of the connection element (90) between the first, closed state and the second, open state to be controlled, the control means (53) being configured to place the connection element in the first, closed state when the starter-generator (1) is operating in starter mode, and to place the connection element (90) in the second, open state when the starter-generator is operating in generator mode.

5. The starter-generator according to any one of claims 1 to 2, wherein the connection device comprises a connection element comprising an ohmic conductor (900) that is electrically connected on the one hand to the first electrical line (61) and on the other hand to the second electrical line (62).

6. The starter-generator according to the preceding claim, wherein the electrical resistance of the ohmic conductor (900) is higher than that of the direct-current (DC) stator winding.

7. The starter-generator according to any one of the preceding claims, wherein the connection device comprises a connection element that is connected on the one hand to the first electrical line (61) and on the other hand to the second electrical line (62), and wherein the connection element is attached to the alternator regulator.

8. The starter-generator according to the preceding claim, comprising a rotary machine comprising the main machine, the exciter and a casing enclosing the main machine and the exciter, said starter-generator comprising a regulator assembly comprising the alternator regulator and the connection element, the regulator assembly and the rotary machine forming two objects that are electrically connected or intended to be electrically connected to one another.

9. The starter-generator according to any one of claims 7 to 8, wherein the alternator regulator (50) comprises a first regulator (51) allowing the supply current and/or voltage of the direct-current stator winding to be regulated, the first regulator comprising power components that are electrically connected to one another by conductive tracks that are formed on a printed circuit board, the connection element being attached to the printed circuit board.

10. The starter-generator according to any one of claims 7 to 8, wherein the connection device comprises a connection element that is connected on the one hand to the first electrical line (61) and on the other hand to the second electrical line (62), and wherein the alternator regulator (50) comprises a first support (54) and a first regulator (51) that is supplied with direct current and allows the supply current and/or voltage of the direct-current stator winding to be regulated, wherein the first support (54) is a housing accommodating the first regulator (51) and the connection element.

11. The starter-generator according to any one of claims 7 to 10, wherein the starter-regulator comprises a single-phase inverter (74) and a three-phase inverter (71) that are attached to the alternator regulator.

12. The starter-generator according to any one of the preceding claims, comprising a rotary machine comprising the main electric machine and the exciter and a casing (150) accommodating the main electric machine and the exciter, wherein the connection device comprises a connection element that is connected on the one hand to the first electrical line (61) and on the other hand to the second electrical line (62), the connection element being attached to the casing.

13. The starter-generator according to the preceding claim, wherein the connection element is accommodated in the casing.

14. The starter-generator according to any one of claims 12 to 13, comprising a transformer assembly comprising the rotary machine and the connection element, the transformer assembly and the alternator regulator forming two objects that are electrically connected or intended to be electrically connected to one another.

15. The starter-generator according to any one of claims 12 to 13 insofar as they are dependent on claim 6, wherein the alternator regulator is attached to the casing.

16. The starter-generator according to claim 14 insofar as it is dependent on claim 7, wherein the connection element is attached to the casing via said printed circuit board or the housing.

17. The starter-generator according to any one of the preceding claims, wherein the direct-current (DC) stator winding and the alternating-current (AC) stator winding are mounted substantially in phase quadrature so as to limit the voltage induced in the direct-current (DC) stator winding when the starter-generator is operating in starter mode.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2348594